# EUROPEAN PATENT SPECIFICATION

(11) **EP 2 510 140 B1**
(45) Date of publication and mention of the grant of the patent: **26.02.2014**
(21) Application number: 10803470.3
(22) Date of filing: 10.12.2010
(51) Int. Cl.: D04H 1/42, D04H 1/46, F16N 31/00

(54) **OIL COLLECTING DEVICE**
ÖLSAMMELVORRICHTUNG
DISPOSITIF DE COLLECTE D'HUILE

(30) Priority: 11.12.2009 GB 0921692
(43) Date of publication of application: 17.10.2012
(73) Proprietor: Manvers Engineering Limited, Barnsley, South Yorkshire S72 7PD (GB)
(72) Inventor: IBBOTSON, Colin, Barnsley S73 0QW (GB)
(74) Representative: White, Nicholas John
(86) International application number: PCT/GB2010/052069
(87) International publication number: WO 2011/070371

(56) References cited:
- WO-A1-2005/037536
- CA-A1- 2 219 749
- DE-U1- 20 309 028
- DE-U1-202004 004 931
- GB-A- 2 428 032
- US-A- 4 909 355
- US-A- 5 308 670
- US-A- 5 921 602

## Description

### Field of the Invention

This invention relates to a collecting device for collecting oil for use in protecting the ground beneath machinery, for example portable plant used in civil engineering and the like.

### Background to the Invention

Leakage or accidental spillage of fluids such as oil from machinery, in particular portable or automotive machinery used in civil engineering projects, can lead to pollution of the ground. For example, engine oil, diesel fuel oil and hydraulic fluids can cause environmental damage. There are stringent requirements for dealing with ground contamination which can be very costly for a contractor. It has therefore become normal practice to use some form of collector beneath the machinery to collect and retain any fluids escaping from the machinery or spilled near it.

One such oil collector is described in GB2428032. This portable collector comprises a mat having a self supporting perimeter wall upstanding from an impermeable base layer. The mat and wall comprise a layer of oleophilic material. The material of the wall is water permeable. Any water, such as rain water, falling on the mat escapes through the water permeable wall. Oily fluids are retained by the oleophilic material for later disposal or reuse.

A problem with this type of collector can arise if there is a significant spill of oily fluid rather than just seepage from joints, etc.. The oil can overwhelm the collector and thus escape to the surrounding soil. The resultant pollution can lead to a substantial fine for the operator together with a requirement to clean up the site. This can involve a substantial additional cost. Furthermore the oil is lost and cannot be recovered for reuse.

### Summary of the Invention

The present invention proposes a modified version of the collector described in GB2428032. The modification can be mounted on a collection tray or tank.

According to the present invention there is provided a mat for use in a portable collector for machine fluids, the mat having a self supporting perimeter wall upstanding from a base layer, the base layer comprising a layer of an oil permeable hydrophobic material and the wall comprising a layer of water permeable oleophilic material, whereby oily fluid falling on the mat passes through the base layer and water falling on the mat escapes through the wall.

The invention further provides a portable collector for machine fluids comprising an open tank, a mesh plate mounted on the top of the open tank and a mat as described above mounted on the mesh plate.

Preferably the base of the mat has a margin of material which is impermeable to oil. This prevents the oily fluid from escaping sideways out of the mat.

Preferably the oil permeable material forming the base layer comprises a felt material with a fabric cover. The felts are made up of oleophilic/hydrophobic polytetrafluoroethylene (PTFE) fibres. Other polymers with hydrophobic properties include fluorocarbons such as polypropylene, polydimethyl siloxane (silicones), polyethylene, polycarbonates and alkylketene dimers.

Preferably the oleophilic material forming the walls comprises fibres of an oily plastic material such as polyolefin. PTFE fibres are especially suitable being commonly used for collection and retention of oil spills and the like.

The hydrophobic fibres may be formed from the appropriate polymers as indicated hereinbefore, or as a fibre coating, by plasma deposition, surface modification e.g. lotus-leaf effect, or by a sol-gel process.

Superhydrophobic surfaces can be created by plasma enhanced and hot filament chemical vapour deposition, electrochemical deposition (textiles), oxygen plasma micro roughening (textiles), sol-gel processing (textiles), electrospinning (textiles), inductive coupling plasma method, soft lithography (creating large area periodic micro/nanopatterns), chemical etching, wet chemical reaction and hydrothermal reaction. Substrates can be polymers with intrinsic hydrophobic properties - fluorocarbons (like PTFE), polydimethyl siloxane (silicones), Polyethylene (PE), polyprolylene (PP), polystyrene (PS), polyamide, polycarbonate, alkylketene dimer - Nanofibres (rough surface), Nanotubes (rough surface), Nanowires (rough surface), and bulk metal substrates.

Particle deposition to the substrates can be achieved by:
- Polydimethyl siloxane (PDMS) treated by a CO₂ pulsed laser
- Pulse laser deposition technique of PFTE film on a glass substrate
- Electrostatic deposition of rough layer coating of fluoroalkylsilane on CA nanofibres
- Depositing about 2.5 nm FePt nanoparticles with varying degree of fluorinated ligands on their surface
- Copper mesh films by an electrochemical deposition induced by long-chain fatty acids
- 3D porous copper films - the films were electrodeposited and grew within the interstitial spaces between the hydrogen bubbles
- deposition of micro- and nano-sized silica particles on a glass substrate with the formation of a self-assembled monolayer of dodecyltrichorosilane on the surface of the particle film
- Deposition of nanoparticles via altering dipping into an aqueous suspension of the negatively charged nanoparticles and an aqueous PAH solution
- Poly(allylamine hydrochloride)/poly(acrylic acid) multilayer of honeycomb-like structure on a surface after combination of acidic treatments.

Sol-gel techniques include:
- Colloidal films made from latex spheres with nBA/St = 0.18 assembled at 30_C
- Perfluorooctyl-modified cotton sample- a particle-covered cotton textile modified with PDMS (polydimethylsiloxane)
- Sol-gel film from colloidal silica particles and fluoroalkylsilane compounds by hydrolysis and condensation of alkoxylane compounds
- Modifying silica gel based film by fluorinated silane
- Copper alloy material and hexamethylenetetramine and ethylene glycol, a strong bidentate chelating agent to Cu²⁺ and Fe²⁺ ions - nanorod film of Cu-ferrite by sol-gel process
- Pore indium oxide array films with controllable superhydrophobic and lipophobic properties was fabricated by sol-dipping method using the polystyrene colloidal monolayers
- Porous sol-gel foam from organo-triethoxysilanes

Plasma treatment methods include:
- Teflon film treated with oxygen plasma
- Oxygen plasma etching of PET followed by plasma enhanced chemical vapour deposition of tetramethyl silane
- Nanofibrous cellulose triacetate treated with CF₄ plasma
- Hydrophobic coating of carbon nanotubes by methane glow discharge plasma at low pressure
- Amenable plasma process for the fabrication of superhydrophobic poly(methyl methacrylate) (PMMA) surfaces using only one load/unload step in a low-pressure, highdensity plasma (O₂) reactor
- Micro-condensation using plasmachemical - pulsed plasma deposited poly(glycidyl methacrylate) array reacted with 50 Im amino-polystyrene microspheres
- Fabrication of micro-textures for inducing a superhydrophobic behavior on hydrogenterminated Si surfaces - Si nanowires grown on the Si islands with Au cluster on the tips of the nanowires treated by plasma etching

Vapour deposition methods include:
- Chemical vapour deposition of poly(perfluoralkyl ethyl methacrylate) on nanofibres with beads-on-string morphology
- Chemical vapour deposition of (tridecafluoro-1,1,2,2-tetrahydrooctyl)-1-trichlorsilane followed by 2h thermal annealing
- Coating of a thin layer of fluorinated polymer on electrospun mats by initiated chemical vapour deposition
- Thin layer coating of ZnO
- Large-scale pyramid-like micropatterns prepared via capillarity-driven self-assembly during the evaporation of water from aligned CNTs wrapped by a polyelectrolyte, poly (sodium 4-styrenesulfonate) large-scale pyramid-like micropatterns prepared via capillarity-driven self-assembly during the evaporation of water from aligned CNTs wrapped by a polyelectrolyte, poly (sodium 4-styrenesulfonate) large-scale pyramid-like micropatterns prepared via capillarity-driven self-assembly during the evaporation of water from aligned CNTs wrapped by a polyelectrolyte, poly (sodium 4-styrenesulfonate)

Electrospinning techniques include:
- Nanofirbous mat by electrospinning of PS-PDMS (poly(styrene-b-dimethylsiloxane) block copolymer blended with PS homopolymer (textile applications)
- PS microsphere/nanofibre composite substrate
- Electrostatic spinning and spraying of PS solution in DMF - superhydrophobic film
- Vertically aligned PS nanofibres.

Polymerization reactions include:
- Superhydrophobic aerosol 200 by using methoxysilanes in toluene reflux with p-toluenesulfonic acid as a catalyst
- Polypropylene film with the nanoribbon polyaniline structure - grafting polymerization of acrylate acid onto the surface of a polypropylene film and subsequently an oxidative polymerization of aniline on the grafted surface
- Random copolymer, poly (TMSMA-r-fluoroMA) [3-(trimethoxysilyl)propylmethacrylate] (TMSMA), methacylate (MA)] on oxide-based substrates
- Perfluoroctanesulfonate (PFOS) doped conduting polypyrrole (PPy) by a combination of electropolymerization and chemical polymerization

Casting techniques include:
- Casting of fluorinated block polymer solution under humid environment
- Casting of micellar solution of PS-PDMS in humid air
- Nanocasting methos to make superhydrophobic surface

Other methods include:
- Calcium Carbonate Powder treated with fatty acid (hydrophobic, oleophilic)
- Controlled assembly of carbon nanotubes on cotton fibers - the cotton fibers were modified using treated carbon nanotubes as macro-initiators
- Cotton fabric immersed in sol of fluoroalkyl siloxane (Dynasylan®), dried, cured, subsequently immersed in solution of CF₃(CF₂)₅(C=O)NH(CH₂)₃Si(OC₂H₅)₃ in toluene, dried
- Complex coating of amino- and epoxy functionalized silica nanoparticles on epoxy-functionalized cotton surface followed by hydrophobization with stearic acid, 1H,1H,2H,2H perfluorodecyltrichlorosilane, or their combination
- Cotton fabric treated with aqueous KOH and AgNO₃ followed by reduction treatment with ascorbic acid in presence of polymeric steric stabilizer
- Fabricating rough surface of cotton fabric by using SiO₂ nanoparticles and ZnO nanorod arrays with subsequent n-dodecyltrimethoxysilane (DTMS) modification
- Heat- and pressure-driven imprinting methods employing patterned AAOs as replication templates - applied to all thermoplastic polymers
- A silver hierarchical bowl-like ordered array film on glass substrate with a colloidal monolayer prepared by solution-dipping method and subsequent heating decomposition using a polystyrene colloidal monolayer as a template and a silver acetate solution as the precursor
- Polytetrafluoroethylene (PTFE) films on fluorine doped tin oxide coated glass sidles was also presented by employing the electrospray technique using a commercial PTFE particle suspension in water
- Immersing copper substrate into n-tetradecanoic acid solution
- Chemical etching on polycrystalline metals with acidic or basic solution, treatment with fluoroalkylsilane
- Nickel substrate reacting with monoalkyl phospohonic acid
- Copper substrates treated with oxalic acid as reacting agent and then modified with poly(dimethyliloxane) vinyl terminated (PDMSVT)
- Cu plate immersed in mixture of solution of NaOH and K₂S₂O₈, chemically modified with dodecanoic acid results in Cu(OH)₂ nanowires on the surface
- Magnesium alloy pretreated with microarc oxidation and chemical modification with PDMSVT with spincoating
- Reaction of metal salts and alkanethiols
- Spiral Co₃O₄ nanorod arrays by a hydrothermal method of Co(NO₃)₂.6H₂O as resource
- ZnO nanorod film generated on zinc substrate by natural oxidation of zinc metal and subsequent modification with a monolayer of n-octadecyl thiol
- Rambutan-like hollow spheres of polyaniline by means of a self-assembly method in the presence of perfluorooctane sulfonic acid (PFOSA), which is employed as a dopant and soft template
- Crater-like structure on Ti₆Al₄V alloy substrate by means of sandblast with SiO₂ microparticles, which is a pure physical process, and the surface compositions remain unchanged - easily applied to other metals and their alloys
- Phase-separation micromolding (PSIM)
- Laser etching method apllied on PDMS elastomer
- Controlled crystallization of PE by adding nonsolvent (cyclohexanone) to the PE/xylene solution
- Silicone filaments coating on textile fibres - dense layer of polyalkylsilsequioxane filaments can be grown on wide variety of materials in a gas solvent phase coating setup (PET, cotton, viscose, PAN, wool)
- Silica-sol coating of textiles - solution of silica-sol with hydrophobic additives (having large alkyl chains or fluorinated groups) was coated on PET and PET/cotton fabrics
- Dip-coating of cotton fabric by solution of silica nanoparticles, silane hydrophobes and silane cross-linkers
- Treatment of hydrophobic thermoplastic fibres with certain aqueous dispersions of waxes and metal salts
- PP nonwoven coated (dip-coating) with a polymer solution (non-fluorized PP, non-fluorized PP copolymer, non-fluorized PE , non-fluorized PET). The polymers have linear or rather star-shaped, branched or dentritic structure to create features in micro & nano ranges on the nonwoven surface

The fibres are preferably contained within a permeable fabric cover, for example a woven or non woven fabric formed from polypropylene or the like.

The oil permeable base layer is flexible such that it can be rolled up for storage. The mat according to the invention is light in weight and therefore easy to deploy and easy to remove when no longer required.

Oil collected in the tank will be clean enough for re-use.

### Brief Description of the Drawings

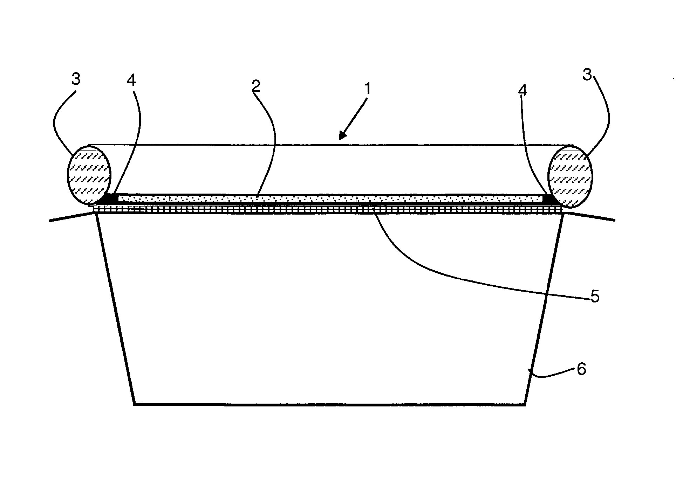

In order that the invention may be more clearly understood, reference will now be made to the drawing, given by way of example only, in which the sole figure is a schematic partially-sectioned side view of the mat according to the invention mounted on a collection tray or open tank.

### Detailed Description of the Illustrated Embodiment

The collector shown in the drawing comprises a mat 1 having a base layer 2 and a wall 3 upstanding around the perimeter thereof. The mat can be rectangular. However it will be understood that the shape of the mat is not important. The shape can be varied, dependent upon the machinery beneath which it is to be used. The wall 3 is formed as a tubular fabric structure filled with polypropylene fibre material to give it sufficient rigidity to be self supporting in use. The height of the wall 3 above the base layer 2 is typically 50mm to 100mm.

The wall 3 may be continuous or it may be constructed in sections joined together at the corners. The wall 3 is provided with a flattened base for attachment to the base layer 2 around the periphery thereof.

The base layer 2 of the mat 1 is oil permeable. It is formed of an oil permeable hydrophobic felt layer. This layer is covered by a fabric material.

Several tests were conducted with different materials forming the hydrophobic felt layer. Each of the felts was made up of oleophilic/hydrophobic polypropylene fibres. The results are described below:

### Test fabric

1. 300gsm 3 denier oilflow, needled both sides through both looms. Oil quickly adsorbed but no flow through.
2. 600gsm 6 denier oilflow, needled both sides through both looms. Oil adsorption not as quick, no flow through.
3. 300gsm 6 denier oilflow, needled both sides through both looms. Same adsorption as example 2, still no flow through.
4. 600gsm 6 denier oilflow, needled both sides first loom only. Adsorption still slow, no flow through.
5. 300gsm 6 denier oilflow, needled both sides first loom only. Adsorption still slow, no flow through.
6. 120gsm 6.7 denier oilflow, needled one side only through both looms.
   Oil Passed through but so did water.
7. 120gsm 3.3 denier oilflow, needled one side only through both looms.
   Oil passed slowly, no water flow through.
8. 120gsm 50% 3.3 denier, 50% 6.7 denier oilflow, needled one side only through both looms.
   Good oil flow through, no water flow through.

As can be seen test fabric 8 gave a very encouraging result. This fabric allows oily fluid to pass through the base layer 2 but does not allow water to pass through.

In a preferred embodiment of the invention the periphery of the base layer 2 is provided with a margin 4 of material which is oil impermeable. Such a marginal area 4 can prevent the escape of oily fluid sideways from the mat.

The walls 3 may be attached to the base layer 2 by any convenient method such as, for example, stitching, adhesive or welding.

In use the mat 1 is mounted on a mesh plate 5 which is in turn mounted on an open tank 6, or collector. The mesh plate may be made of steel. The mesh plate supports the mat while still giving access to the tank.

Oil droplets fall onto the mat from the machinery under which it is placed. The droplets fall onto the base layer 2 of the mat 1. Since the base layer 2 is formed of oil permeable material the oily fluid may pass through the base layer, through the mesh plate 5 and into the tank 6. The oil collected in the tank 6 is clean enough for reuse. The marginal area 4 helps prevent any oily fluid reaching the walls and being retained in the walls.

Rain water that falls onto the mat cannot pass through the base layer 2 since the material is hydrophobic. The water is repelled by the base layer and escapes through the walls 3, the material of the walls being water permeable. The mat is configured such that any water run off does not enter the tank 6.

The invention has been described above with respect to a preferred embodiment. It will be understood by those skilled in the art that changes and modifications may be made thereto without departing from the scope of the invention as set out in the appended claims.

## Claims

1. A mat for use in a portable collector for machine fluids, the mat having a self supporting perimeter wall upstanding from a base layer, the base layer comprising a layer of an oil permeable hydrophobic material and the wall comprising a layer of water permeable oleophilic material, whereby oily fluid falling on the mat passes through the base layer and water falling on the mat escapes through the wall.

2. A mat as claimed in Claim 1, wherein the base layer is formed of a felt material.

3. A mat as claimed in Claim 2, wherein the felt material is formed from oleophilic/hydrophobic polypropylene fibres.

4. A mat as claimed in Claim 1, 2 or 3, wherein the periphery of the base layer has a marginal area in which the layer is impermeable to oil.

5. A mat as claimed in Claim 3, wherein the fibres are contained within a permeable fabric cover.

6. A mat as claimed in any preceding claim, wherein the oleophilic material forming the walls comprises fibres of an oily plastics material.

7. A mat as claimed in Claim 6, wherein the oily plastics material is a polyolefin.

8. A mat as claimed in Claim 7, wherein the polyolefin is polypropylene.

9. A portable collector for machine fluids comprising an open tank, a mesh plate mounted on the open tank and a mat as claimed in any preceding claim, mounted on the mesh plate.

## Patentansprüche

1. Matte zur Verwendung in einer tragbaren Auffangvorrichtung für Maschinenfluide, wobei die Matte selbst eine von einer Basisschicht aufragende selbstragende Umfangswand aufweist, wobei die Basisschicht eine Schicht aus einem öldurchlässigen hydrophoben Material umfasst und die Wand eine Schicht aus wasserdurchlässigem oleophilem Material umfasst, wodurch auf die Matte fallendes öliges Fluid durch die Basisschicht hindurchgeht und auf die Matte fallendes Wasser durch die Wand austritt.

2. Matte nach Anspruch 1, wobei die Basisschicht aus einem Filzmaterial gebildet ist.

3. Matte nach Anspruch 2, wobei das Filzmaterial aus oleophilen/hydrophoben Polypropylenfasern gebildet ist.

4. Matte nach Anspruch 1, 2 oder 3, wobei die Peripherie der Basisschicht einen Randbereich aufweist, in dem die Schicht ölundurchlässig ist.

5. Matte nach Anspruch 3, wobei die Fasern in einer Abdeckung aus einem durchlässigen textilen Flächengebilde enthalten sind.

6. Matte nach einem der vorhergehenden Ansprüche, wobei das die Wände bildende oleophile Material Fasern aus einem öligen Kunststoffmaterial umfasst.

7. Matte nach Anspruch 6, wobei es sich bei dem öligen Kunststoffmaterial um ein Polyolefin handelt.

8. Matte nach Anspruch 7, wobei es sich bei dem Polyolefin um Polypropylen handelt.

9. Tragbare Auffangvorrichtung für Maschinenfluide mit einem offenen Tank, einer auf dem offenen Tank angebrachten Gitterplatte und einer auf der Siebplatte angebrachten Matte nach einem der vorhergehenden Ansprüche.

## Revendications

1. Matelas à utiliser dans un collecteur portatif pour des fluides de machine, le matelas présentant une paroi périmétrique auto-portante qui se dresse à partir d'une couche de base, la couche de base comprenant une couche de matière hydrophobe perméable à l'huile, et la paroi comprenant une couche de matière oléophile perméable à l'eau, dans lequel un fluide huileux tombant sur le matelas passe à travers la couche de base, et de l'eau tombant sur le matelas s'échappe à travers la paroi.

2. Matelas selon la revendication 1, dans lequel la couche de base est constituée d'une matière de feutre.

3. Matelas selon la revendication 2, dans lequel la matière de feutre est formée à partir de fibres de polypropylène oléophiles/hydrophobes.

4. Matelas selon la revendication 1, 2 ou 3, dans lequel la périphérie de la couche de base présente une surface marginale dans laquelle la couche est imperméable à l'huile.

5. Matelas selon la revendication 3, dans lequel les fibres sont contenues à l'intérieur d'une couverture de tissu perméable.

6. Matelas selon l'une quelconque des revendications précédentes, dans lequel la matière oléophile formant les parois comprend des fibres d'une matière plastique huileuse.

7. Matelas selon la revendication 6, dans lequel la matière plastique huileuse est une polyoléfine.

8. Matelas selon la revendication 7, dans lequel la polyoléfine est le polypropylène.

9. Collecteur portatif pour des fluides de machine comprenant un réservoir ouvert, une plaque de grillage montée sur le réservoir ouvert et un matelas selon l'une quelconque des revendications précédentes, monté sur la plaque de grillage.
